# FASCICULE DE BREVET EUROPEEN

(11) **EP 0 379 706 B1**
(45) Date de publication et mention de la délivrance du brevet: **08.03.1995**
(21) Numéro de dépôt: 89123450.2
(22) Date de dépôt: 19.12.1989
(51) Int. Cl.: H04B 17/00

(54) **Dispositif non intrusif de diagnostic d'un canal de transmission pour modem numérique appliqué à un démodulateur régénérateur**
Beeinflussungsfreie Übertragungskanaldiagnostikeinrichtung für ein Digitalmodem bei einem Demodulator-Regenerator
Non-intrusive device for diagnosing a transmission channel for a digital modem applied to a demodulator-regenerator

(30) Priorité: 28.12.1988 FR 8817312
(43) Date de publication de la demande: 01.08.1990
(73) Titulaire: ALCATEL TELSPACE, 92734 Nanterre Cédex (FR)
(72) Inventeur: Roux, Pierre, F-92400 Courbevoie (FR)
(74) Mandataire: Weinmiller, Jürgen

(56) Documents cités:
- IEEE GLOBAL TELECOMMUNICATIONS CONFERENCE & EXHIBITION, Hollywood,Florida, 28 novembre - 1 décembre 1988, vol. 1, pages 0158-0162, IEEE, New York, US; H.J. CHOI: "Estimation of signal parameters by using digital techniques"
- MESURES, vol. 52, no. 14, 23 novembre 1987, pages 81-83, Paris, FR; "Analyse de constellation, réellement simple?"
- ELECTRONICS, vol. 61, no. 4, 18 février 1988, pages 54D-54E, New York, US; P.FLETCHER: "Ethernet analyzer spots trouble before the network crashes"
- HEWLETT-PACKARD JOURNAL, vol. 38, no. 10, octobre 1987, pages 4-15, Palo Alto, CA, US; N. CARDER et al.: "In-service transmission impairment testing of voice-frequency data circuits"

## Description

La présente invention se rapporte à un dispositif non intrusif de diagnostic du canal de transmission pour modem numérique, appliqué à un démodulateur régénérateur.

Les faisceaux hertziens sont en général associés à des outils d'aide à l'exploitation et à la maintenance. D'une façon générale, le diagnostic effectué par ces dispositifs sur le faisceau se réduit à la gestion d'un jeu d'alarmes détectant le non-fonctionnement des fonctions élémentaires de ce faisceau.

Ces dispositifs connus se révèlent insuffisants lorsque l'on désire obtenir des informations, pour un bond et un canal donné, sur entre autres :
- les évènements de propagation (trajets multiples essentiellement), avec des statistiques sur ces évènements en fonction de leurs caractéristiques ;
- la fonction de transfert du canal, et par conséquent la distorsion linéaire résiduelle, et son évolution lente éventuelle au cours du temps ;
- la distorsion non-linéaire résiduelle ;
- le rapport signal à bruit sur le signal reçu.

L'analyse des évènements de propagation peut se faire, de manière connue en soi, par des enregistrements utilisant des équipements dédiés à cette tâche (liaison hertzienne associée à un Analyseur de Faisceaux Hertziens). Ceci a pour inconvénient que, pendant que dure cette analyse, la liaison ainsi équipée est alors inutilisable pour son utilisation normale de transmission.

Il est connu d'effectuer cette analyse de manière non-intrusive, c'est-à-dire sans perturber le fonctionnement de la liaison, par l'analyse des coefficients de l'égaliseur temporel, si le faisceau est équipé d'un tel dispositif. L'inconvénient dans ce cas, est que cette analyse est limitée par les caractéristiques de l'égaliseur temporel. S'il s'agit d'un analyseur synchrone, la fenêtre fréquentielle d'analyse ne couvre alors pas la totalité du spectre du signal. En outre, la résolution fréquentielle d'analyse est dans un tel cas limitée par le nombre de coefficients associé à l'égaliseur.

Cette méthode est aussi applicable à tout autre dispositif de contre-mesure équipant les faisceaux hertziens numériques (égaliseurs fréquentiels, diversité), et elle a pour inconvénient de toujours conduire à une analyse grossière du canal. En outre, l'analyse qui est faite concerne toujours la distorsion corrigée, et non pas la distorsion résiduelle.

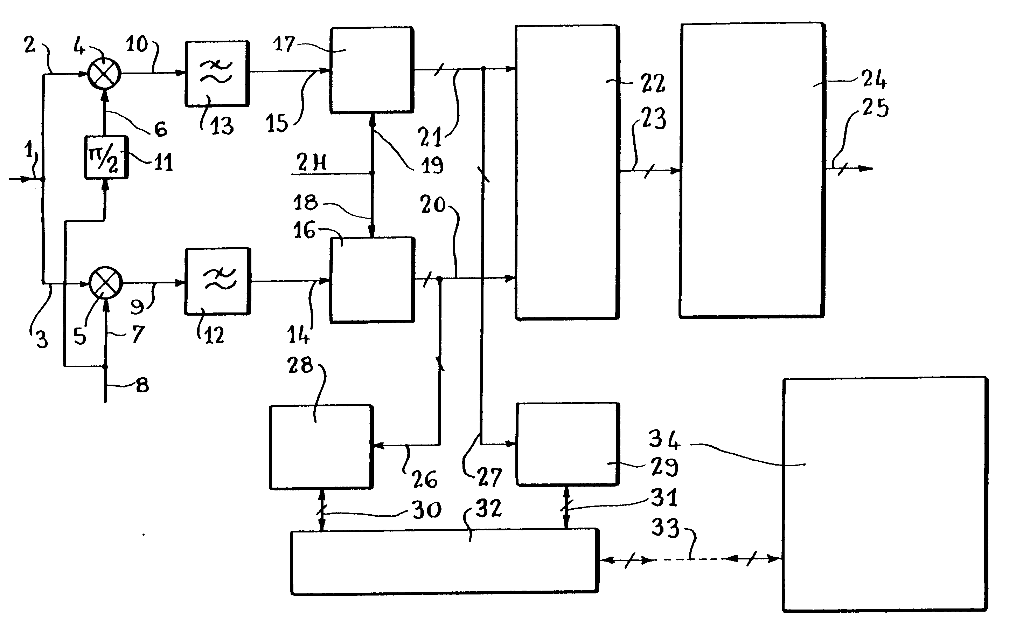

On connaît, en référence à la figure unique annexée, des récepteurs de signaux numériques comprenant deux mélangeurs 4, 5 recevant des signaux de porteuse en quadrature et fournissant chacun un signal démodulé en bande de base 9, 10 à un filtre passe-bas 12, 13 suivi d'un convertisseur analogique-numérique 16, 17. Les convertisseurs 16, 17 sont séquencés par un signal d'horloge 2H de fréquence égale à un multiple du débit symbolique et au moins égal à deux fois ce débit. Les convertisseurs 16, 17 fournissent des échantillons à un égaliseur numérique fractionné et à un filtre numérique 22 suivis d'un circuit 24 de décision et de régénération fournissant un signal régénéré 25.

L'article intitulé "Analyse de constellation, réellement simple ?" paru dans Mesures, vol. 52, n°14 du 23 novembre 1987, pages 81 à 83 décrit une méthode d'analyse non intrusive de la constellation d'un signal numérique modulé. Cette méthode permet d'effectuer un diagnostic d'un canal de transmission pour modem numérique et le récepteur comporte un démodulateur régénérateur de signaux. Comme il est bien connu, les analyseurs de constellation du type décrit dans cet article ont l'inconvénient de ne pas effectuer d'échantillonnage dans les conditions de Shannon car un échantillon sur n symboles est pris en compte. On peut donc parler de sous-échantillonnage. Or, un sous-échantillonnage, s'il permet à la limite d'avoir une idée des non-linéarités, ne permet pas de connaître la fonction de transfert du canal, de séparer la distorsion non linéaire de la distorsion linéaire, ou encore de mesurer le bruit thermique.

L'article intitulé "Estimation of signal parameters by using digital techniques" paru dans IEEE GLOBAL TELECOMMUNICATIONS CONFERENCE AND EXHIBITION", Hollywood, Florida, 28 nov.-1 déc. 1988, vol.1, pages 158 à 162, décrit un dispositif de diagnostic numérique d'une liaison de transmission comportant un étage de conversion de fréquence fournissant un signal en bande de base, un convertisseur analogique-numérique dans chaque voie et une mémoire pour chaque convertisseur. Les mémoires sont raccordées à un processeur qui effectue des calculs pour estimer la qualité de la liaison. Ce dispositif est cependant de type intrusif puisque le signal radio-fréquence est un signal de test qui est différent et, qui plus est, connu pour chaque type de qualité de liaison à estimer. Ainsi, le diagnostic nécessite l'émission de séquences particulières par l'émetteur et donc une interruption du trafic normal sur le canal. Il n'est donc pas possible d'utiliser le signal en phase normale de communication pour établir un diagnostic du canal de transmission.

L'invention, qui vise à remédier à ces inconvénients, offre un dispositif non intrusif de diagnostic d'un canal de transmission pour modem numérique appliqué à un démodulateur régénérateur, qui est entre autres capable d'analyser :
. la fonction de transfert du canal d'un faisceau hertzien, avec une grande résolution fréquentielle : une analyse fine des trajets multiples peut ainsi être faite, ainsi qu'une analyse du filtrage modem, et de son évolution au cours du temps ;
. la distorsion non linéaire résiduelle à la réception ;
. le rapport signal à bruit sur le signal reçu ;
. l'erreur quadratique moyenne sur le signal reçu ;
. les défauts de quadrature sur la constellation.

A cet effet, la présente invention propose un dispositif non intrusif de diagnostic du canal de transmission du signal numérique, ce dispositif étant constitué de deux mémoires vives à écriture rapide recevant les signaux numériques des convertisseurs précédemment mentionnés, les mémoires vives étant reliées à un microprocesseur qui traite ensuite les échantillons mémorisés par les mémoires vives.

L'invention sera bien comprise, et ses avantages et autres caractéristiques ressortiront de la description suivante d'un exemple non limitatif de réalisation, en référence à la figure unique annexée, qui représente schématiquement la partie réception d'un démodulateur-régénateur pour modulation numérique, équipé d'un dispositif de diagnostic conforme à l'invention.

En se référant à cette figure unique, le signal en fréquence intermédiaire ou en hyperfréquence à démoduler est reçu en 1, et il est appliqué, par les fils 2 et 3, à deux mélangeurs, respectivement 4 et 5, qui reçoivent respectivement par ailleurs, sur leur deuxième entrée 6, 7, le signal de porteuse récupérée en 8, respectivement déphasé de 90 degrés par le déphaseur 11 (pour le mélangeur 4) et non déphasé (pour le mélangeur 5).

Des deux mélangeurs 5 et 4 sortent respectivement, en 9 et 10, les signaux démodulés en bande de base, en phase pour le signal en 9 et en quadrature pour le signal en 10. Ces deux signaux, après passage par un filtre respectif 12, 13, sont appliqués aux entrées 14 et 15 de deux convertisseurs analogique-numérique respectifs 16 et 17 qui sont tous deux séquencés, sur leur entrée de signal d'horloge, 18 et 19 respectivement, par un même signal d'horloge de fréquence égale au double de la fréquence symbolique H, la condition étant, comme on le verra ci- après, que la fréquence du signal d'horloge appliqué aux convertisseurs 16 et 17 soit au moins égale au double de cette fréquence H = 1/T des symboles, T étant le laps de temps qui sépare deux symboles consécutifs.

De manière classique, les signaux démodulés et rénumérisés, en sorties 20 et 21 des convertisseurs 16 et 17 sont respectivement appliqués à un circuit 22 comportant un égaliseur numérique et un filtre numérique, dont le signal de sortie en 23 est appliqué au circuit 24 de décision et de régénération, duquel un signal régénéré sort en 25.

Conformément à l'invention, les sorties 20 et 21 précitées sont également reliées, par des connexions multiples 26 et 27 respectivement, à deux mémoires vives à écriture rapide 28 et 29, identiques et de profondeur N (c'est-à-dire pouvant chacune mémoriser un total maximal de N mots). Ces mémoires 28, 29 sont gérées, à travers les connexions multiples 30 et 31, par un microprocesseur 32. Ce processeur 32 est lui-même relié, par des voies de service numériques 33, à un organe logique central de commande et de calcul 34.

Les convertisseurs numérique-analogique 16, 17 sont échantillonnés systématiquement au débit minimum de 2 H = 2/T et offrent une résolution suffisante (par exemple 8 bits). De telles contraintes sont automatiquement satisfaites si le modem est équipé d'un filtrage réception numérique ou d'un égaliseur transverse numérique fractionné, ce qui est présentement le cas.

Les deux mémoires numériques à écriture rapide 28, 29 permettent de mémoriser des échantillons numériques successifs correspondant aux voies en phase 20 et en quadrature 21, pendant un intervalle de temps choisi et égal à NT/2. Le microprocesseur 32 qui contrôle ces mémoires peut demander, suite à une requête provenant du calculateur central 34 par les voies de service numérique 33, un enregistrement, auquel cas les mémoires 28, 29 se remplissent avec les N échantillons qui suivent la demande d'enregistrement. Il peut ensuite accéder au contenu de cet enregistrement, et le transmettre par les voies de service numérique 33, en vue d'être analysées par le calculateur central 34.

Le calculateur 34, qui dispose alors d'un échantillon long de NT/2 du signal complexe (c'est-à-dire en phase et en quadrature) après filtrage, peut estimer le signal complexe émis avant filtrage avec exactitude, même en présence d'une distorsion importante entrainant un taux d'erreur sur la transmission, et donc, par l'intermédiaire de transformées de Fourier par exemple, calculer la fonction de transfert du canal, avec une fenêtre fréquentielle d'analyse égale à 2/T et une résolution fréquentielle égale à 2/NT. Pour obtenir une telle finesse d'analyse avec l'observation des coefficients d'un égaliseur fractionné, il faudrait disposer d'un égaliseur fractionné à N coefficients, ce qui serait beaucoup plus complexe.

Une analyse statistique de la constellation reçue à partir de cet échantillon de signal permet aussi de calculer la distorsion non linéaire résiduelle (par exemple sous forme de courbes amplitude-amplitude et amplitude-phase), le défaut de quadrature, etc... Lors de plusieurs enregistrements consécutifs, le calculateur 34 est capable de séparer les dérives lentes du matériel des évolutions rapides dues aux évènements de propagation, ou des variations erratiques dues au bruit thermique, et donc de quantifier ce bruit thermique.

Comme il va de soi, l'invention n'est pas limitée à l'exemple de réalisation qui vient d'être décrit. Dans cet exemple, le processeur 32 a simplement pour rôle de gérer les échanges sur les voies de service numériques 33 à destination d'un calculateur central 34, constituant par exemple une station terminale. Il est néanmoins également possible d'envisager le cas où c'est le processeur 32 lui-même qui fait le diagnostic, en étudiant l'échantillon mémorisé : il s'agit alors d'un diagnostic local, au lieu d'un diagnostic réalisé au niveau de l'ensemble du faisceau hertzien. Le signal d'horloge appliqué, en 18 et 19, aux convertisseurs analogique-numérique 16 et 17, est un signal à fréquence 2 H afin de satisfaire au théorème de Shannon puisqu'il existe, dans le spectre utilisé, des composantes spectrales qui vont au delà du débit symbolique : il va de soi que cette même fréquence pourrait tout aussi bien être supérieure à cette valeur minimale 2 H.

## Revendications

1. Récepteur d'un signal numérique, du type comprenant deux mélangeurs (4, 5) recevant des signaux de porteuse en quadrature et fournissant chacun un signal démodulé en bande de base (9, 10) à un filtre passe-bas (12, 13) suivi d'un convertisseur analogique-numérique (16, 17), lesdits convertisseurs (16, 17) étant séquencés par un signal d'horloge (2H) de fréquence égale à un multiple du débit symbolique et au moins égal à deux fois ce débit, lesdits convertisseurs (16, 17) fournissant des échantillons à un égaliseur numérique fractionné et à un filtre numérique (22) suivis d'un circuit (24) de décision et de régénération fournissant un signal régénéré (25), caractérisé en ce qu'il comprend un dispositif non intrusif de diagnostic du canal de transmission dudit signal numérique, ledit dispositif étant constitué de deux mémoires vives (28, 29) à écriture rapide recevant lesdits signaux numériques desdits convertisseurs (16, 17), lesdites mémoires vives (28, 29) étant reliées à un microprocesseur (32) qui traite ensuite les échantillons mémorisés par lesdites mémoires vives (28, 29).

2. Récepteur selon la revendication 1, caractérisé en ce que ledit microprocesseur (32) reconstruit la séquence de symboles émis à partir desdits échantillons mémorisés par lesdites mémoires vives (28, 29), afin de réaliser un diagnostic sur le canal de transmission dudit signal numérique, ledit diagnostic concernant notamment la fonction de transfert, les évènements de propagation, les non-linéarités et le bruit thermique.

## Patentansprüche

1. Empfänger für ein digitales Signal mit zwei Mischstufen (4, 5), die Trägersignale in Quadratur empfangen und je ein demoduliertes Signal (9, 10) im Basisband an ein Tiefpaßfilter (12, 13) liefern, auf das je ein Analog-Digital-Wandler (16, 17) folgt, wobei die Wandler (16, 17) mit einem Taktsignal (2H) getaktet werden, dessen Frequenz ein Vielfaches des Symboldurchsatzes und mindestens das Zweifache dieses Durchsatzes beträgt, wobei die Wandler (16, 17) Tastproben an einen fraktionierten digitalen Entzerrer und an ein digitales Filter (22) liefern, auf die eine Entscheidungs- und Regenerationsschaltung (24) folgt, welche ein regeneriertes Signal (25) liefert, dadurch gekennzeichnet, daß der Empfänger eine den Normalbetrieb nicht unterbrechende Diagnostikvorrichtung für den Kanal zur Übertragung des digitalen Signals enthält, die aus zwei Arbeitsspeichern (28, 29) mit schnellem Schreibzyklus besteht, welche die digitalen Ausgangssignale der Wandler (16, 17) empfangen und an einen Mikroprozessor (32) angeschlossen sind, der dann die in den Arbeitsspeichern (28, 29) gespeicherten Tastproben verarbeitet.

2. Empfänger nach Anspruch 1, dadurch gekennzeichnet, daß der Mikroprozessor (32) die ausgesendete Symbolfolge aufgrund der in den Arbeitsspeichern (28, 29) gespeicherten Tastproben rekonstruiert, um eine Diagnostik für den Kanal zur Übertragung des digitalen Signals durchzuführen, wobei diese Diagnostik insbesondere die Transferfunktion, die Wellenausbreitungsereignisse, die Nichtlinearitäten und das thermische Rauschen betrifft.

## Claims

1. A digital signal receiver of the type comprising two mixers (4, 5) receiving carrier signals in quadrature, with each mixer feeding a signal demodulated into baseband (9, 10) to a lowpass filter (12, 13) followed by an analog-to-digital converter (16, 17), said converters (16, 17) being clocked by a clock signal (2H) at a frequency equal to a multiple of the symbol rate, said multiple being not less than twice said rate, said converters (16, 17) feeding samples to a fractioned digital equalizer and to a digital filter (22) followed by a decision and regenerator circuit (24) delivering a regenerated signal (25), the receiver being characterized in that it comprises a non-intrusive diagnostic system for a digital signal transmission channel, the system being constituted by two fast-write volatile memories (28, 29) receiving said digital signals from the above-mentioned converters (16, 17), the volatile memories (28, 29) being linked to a microprocessor (32) which then processes the memorized samples via the said volatile memories (28, 29).

2. A receiver according to claim 1, characterized in that said microprocessor (32) reconstitutes the sequence of transmitted symbols from said signals memorized by said volatile memory (28, 29) in order to perform diagnosis on the transmission channel of said digital signal, said diagnosis relating to its transfer function, to propagation events, to non-linearities, and to thermal noise.
